# EUROPEAN PATENT APPLICATION

(11) **EP 1 549 100 A2**
(43) Date of publication of application: **29.06.2005**
(21) Application number: 04106811.5
(22) Date of filing: 21.12.2004
(51) Int. Cl.: H04Q 7/38, H04L 12/28

(54) **Use of the context of a wireless terminal for automatic configuration**

(30) Priority: 22.12.2003 US 740623
(71) Applicant: Nokia Corporation, 02150 Espoo (FI)
(72) Inventor: Nurminen, Jukka, 02130, Espoo (FI); Jalkanen, Janne, 00510, Helsinki (FI)
(74) Representative: Read, Matthew Charles

(57) **Abstract**

A wireless communications device controls its operational characteristics by receiving operational information across a short -range wireless network, and setting an op erational characteristic of the device based on the received operational information. The received operational information corresponds to one or more remote devices within communications range of the device. The wireless communications device may alterna tively control its operational characteristics by identifying one or more remote devices within its communications range, and setting an operational characteristic of the WCD based on the one or more identified remote devices.

## Description

### FIELD OF THE INVENTION

The present invention relates to wireless communications. More particularly, the present invention relates to techniques for detecting and using context in wi reless networks.

### BACKGROUND OF THE INVENTION

Short-range wireless proximity networks typically involve devices that have a communications range of one hundred meters or less. To provide communications over long distances, these proximity networks often interface with other networks. For example, short - range networks may interface with cellular networks, wireline telecommunications networks, and the Internet.

Wireless personal area networks (PANs) and wireless local area networks (LANs) are each types of short range wireless proximity networks. PANs and WLANs typically have the common feature of operating in unlicensed portions of the radio spectrum, usually either in the 2.4 GHz Industrial, Scientific, and Medical (ISM) band or the 5 GHz Unlicensed -National Information Infrastructure (U -NII) band. Examples of wireless local area network technology include the IEEE 802.11 WLAN Standard and the HiperLAN Standard. A well -known example of wireless personal area network technology is the Bluetooth Standard.

Bluetooth defines a short-range radio network, originally intended as a cable replacement. It can be used to create ad hoc networks of up to eight devices, where one device is referred to as a master device. The other devices are referred to as slave de vices. The slave devices can communicate with the master device and with each other via the master device. The Bluetooth Special Interest Group, Specification Of The Bluetooth System, Volumes 1 and 2, Core and Profiles: Version 1.1, February 22, 2001, de scribes the principles of Bluetooth device operation and communication protocols. This document is incorporated herein by reference in its entirety. The devices operate in the 2.4 GHz radio band reserved for general use by Industrial, Scientific, and Med ical (ISM) applications. Bluetooth devices are designed to find other Bluetooth devices within their communications range and to discover what services they offer. these devices can form short -range proximity networks that allow users to communicate with each other, often free of any charges or operator services.

Context is becoming increasingly important in mobile devices, since many users carry their devices with them most of the time. For instance, on any given day, a mobile device may accompany its u ser through various personal, professional, private, and public contexts or settings.

Mobile device use that is inconsistent with the device's context is oftentimes undesirable. For example, when a user forgets to switch his mobile phone to a silent mode in certain locations (e.g., libraries, courtrooms, and theaters), its ringing may result in sociably unacceptable or embarrassing situations.

Thus, techniques are needed to enable a wireless device, such as a mobile phone, to determine its current context so that its operational characteristics may be appropriately set. Manual operation is often required to change a device's operating parameters to suit a particular context. For example, users typically have to remember to manually turn their phones to a meeting/silent mode when in a context where device noise is unacceptable. To remind users to make such changes, spoken or written announcements are frequently given in contexts such as theaters and concerts.

One approach to alleviating the need for such m anual operation involves employing a fixed access point, which forces mobile phones within its coverage area to change into a silent operational mode. However, such access point devices are useful only in situations involving a fixed physical location.

Moreover, it is difficult to limit the access point's coverage area to a certain physical area, such as a conference room, since the access point's coverage area will typically be smaller or larger than the dimensions of the room. This may result in difficulties when the coverage area is larger than the room dimensions. For instance, mobile phones outside of the conference room may be forced into a silent mode. Similarly, difficulties may occur when the access point's coverage area is smaller than the dime nsions of the room. This may cause mobile phones near the edges of the room to not be affected by the access point.

### SUMMARY OF THE INVENTION

The present invention is directed to techniques for controlling operational characteristics of a short-range wireless communications device (WCD). Accordingly, a method and system of the present invention receives operational information across a short -range wireless network, and sets an operational characteristic of the WCD based on the received operational information. The received operational information corresponds to one or more remote devices within communications range of the WCD.

Receiving the operational information may include identifying the one or more remote devices, and transmitting at least one reque st for the operational information across the short-range wireless network. In identifying the one or more remote devices, the method and system may perform a Bluetooth inquiry process.

In setting the operational characteristic, the method and system may identify a predominant operational characteristic from the received operational information, and set the operational characteristic of the WCD based on the predominant operational characteristic. This predominant operational characteristic may be adjusted. Such an adjustment may be based on a context indicator included in a scheduled appointment stored by the WCD, the duration that each of the one or more remote devices has been within communications range of the WCD, or on an ambient condition (e.g., bac kground acoustic noise) of the WCD.

A further method and system of the present invention identifies one or more remote devices within communications range of the WCD, and sets an operational characteristic of the WCD based on the one or more identified rem ote devices. Identifying the one or more remote devices may include performing a Bluetooth inquiry process. Also, the identifying the one or more remote devices may include receiving one or more addresses (e.g., Bluetooth device addresses) corresponding to the one or more remote devices.

Setting the operational characteristic of the WCD may include identifying one or more phonebook entries corresponding to the one or more remote devices, and determining a current context of the WCD based on the one or mor e phonebook entries. From this determination, the method and system select the operational characteristic of the WCD, which corresponds to the current context.

In addition to the one or more identified remote devices, the operational characteristic may al so be based on further factors. Such factors include, for example, scheduled appointment(s) stored in the WCD, the duration that each of one or more remote devices has been within communications range of the WCD, and an ambient condition (e.g., background acoustic noise) of the WCD.

Examples of the operational characteristic set by the above methods and systems include ring volume and ring duration. Activating a profile stored in the WCD may set these characteristics.

The present invention advantageously provides for the WCD's operational characteristics to be set based on its context. This context may be determined from its current communications environment. Further features and advantages of the present invention will become apparent from the followin g description and accompanying drawings.

### BRIEF DESCRIPTION OF THE DRAWINGS

In the drawings, like reference numbers generally indicate identical, functionally similar, and/or structurally similar elements. The drawing in which an element first appears is indicated by the leftmost digit(s) in the reference number. The present invention will be described with reference to the accompanying drawings, wherein:

FIGs. 1A and 1B are diagrams of an operational scenario where a wireless communications device move s between different contexts according to one embodiment of the present invention;

FIGs. 2 and 3 are flowcharts of processes according to embodiments of the present invention;

FIG. 4 is a block diagram of an exemplary wireless communications device implementation according to one embodiment of the present invention;

FIG. 5 is a block diagram of a software architecture for a wireless communications device according to one embodiment of the present invention;

FIG. 6 is a diagram of an exemplary phonebook entr y database according to one embodiment of the present invention;

FIG. 7 is a diagram of an exemplary profile database according to one embodiment of the present invention; and

FIGs. 8-11 are flowcharts of operational sequences according to embodiments of the present invention.

### DETAILED DESCRIPTION OF THE PREFERRED EMBODIMENTS

### I. Operational Scenario

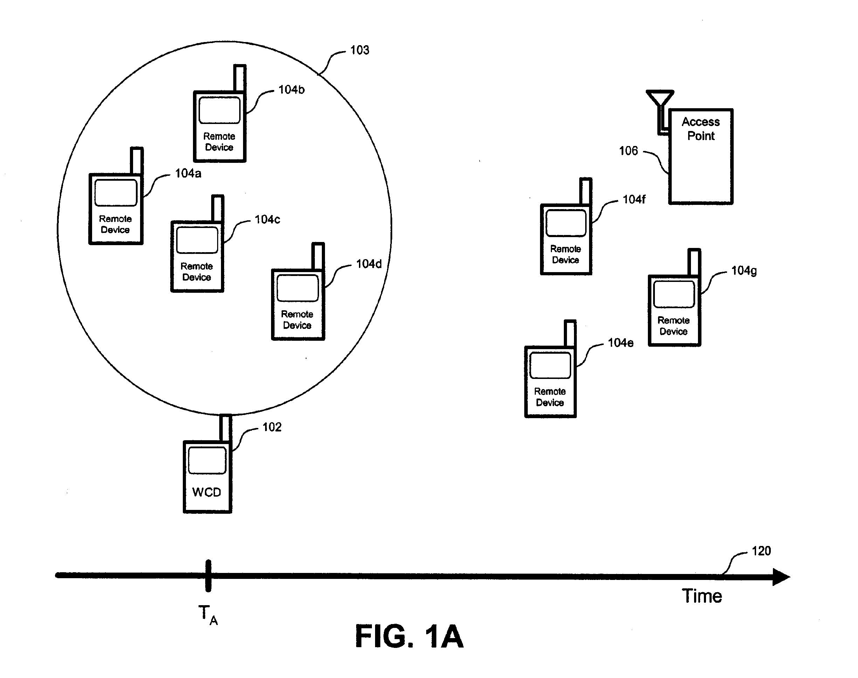

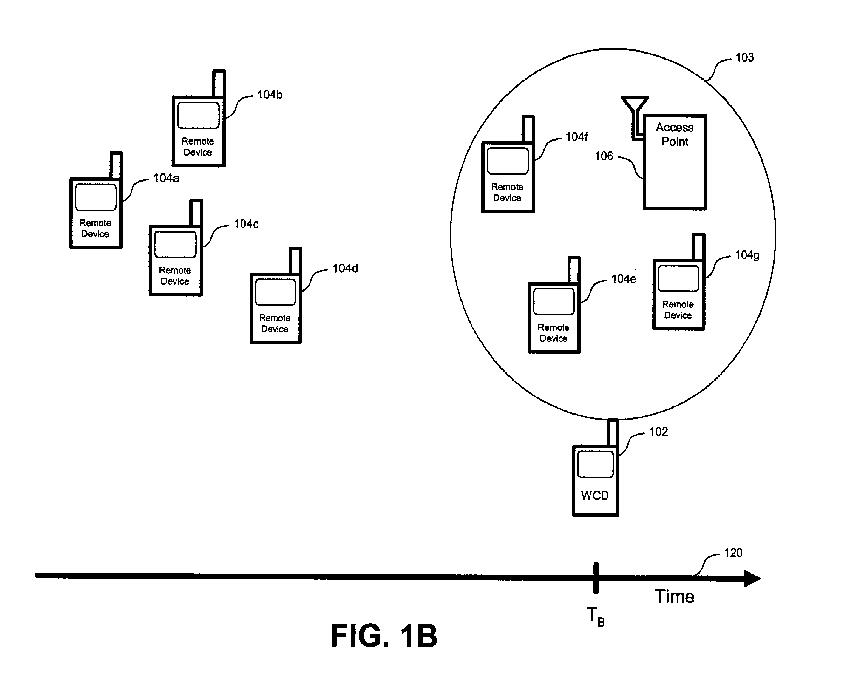

Before describing the invention in detail, it is helpful to describe an environment in which the invention may be used. Accordingly, FIGs. 1A and 1B are diagra ms of an operational scenario according to embodiments of the present invention where a portable wireless communications device (WCD) 102 moves into two different contexts, at two different times. These times, T _{A} and T _{B}, are shown along a time axis 120. FIGs. 1A and 1B show that WCD 102 has a communications range determined by its coverage area 103. Within this communications range, WCD 102 may establish short -range (e.g., Bluetooth) connections with other devices.

For instance, FIG. 1A shows that at tim e T_{A}, short-range remote devices 104a-d are within the communications range of WCD 102. Next, FIG. 1B shows that at time T _{B}, short-range remote devices 104e -g and an access point 106 are within the communications range of WCD 102.

Different social contexts are imposed at each of times illustrated in FIGs. 1A and 1B. For each of these social contexts, certain behaviors are acceptable while other behaviors are unacceptable. For example, people are expected to keep their electronic devices silent in the context at occurring at time T _{A}. Thus, at this moment, WCD 102 may be at a location (such as an office, a library, or a theater) where a quiet, distraction -free environment is desirable.

In contrast, sounds from electronic devices are generally acceptable i n the context occurring at time T _{B}. Accordingly, at this moment, WCD 102 may be in a place where the social context is festive, such as a nightclub.

In each of the locations of FIGs. 1A and 1B, various ad hoc networks may be formed between devices. For example, at time T_{A}, WCD 102 may form short-range ad hoc network(s) with one or more of remote devices 104a -d. Similarly, at time T_{B}, WCD 102 may form short-range ad hoc network(s) with one or more of remote devices 104e -g and/or access point 106. These ad hoc networks may be formed according to Bluetooth, or according to other ad hoc networking technologies.

WCD 102 can infer its current context from the devices within its communications range. These inferences may be based on the identity of the remote d evices that are within its communications range, and/or operational information received from these remote devices. From such inferences, the operational characteristics of WCD 102 may change. Such changes may be automatic. Alternatively, such changes m ay involve user interaction. For instance, WCD 102 may suggest to its user that its operational characteristics should be changed to fit the current environment. The user may then change the operational characteristics of WCD 102 by approving such sugges tions.

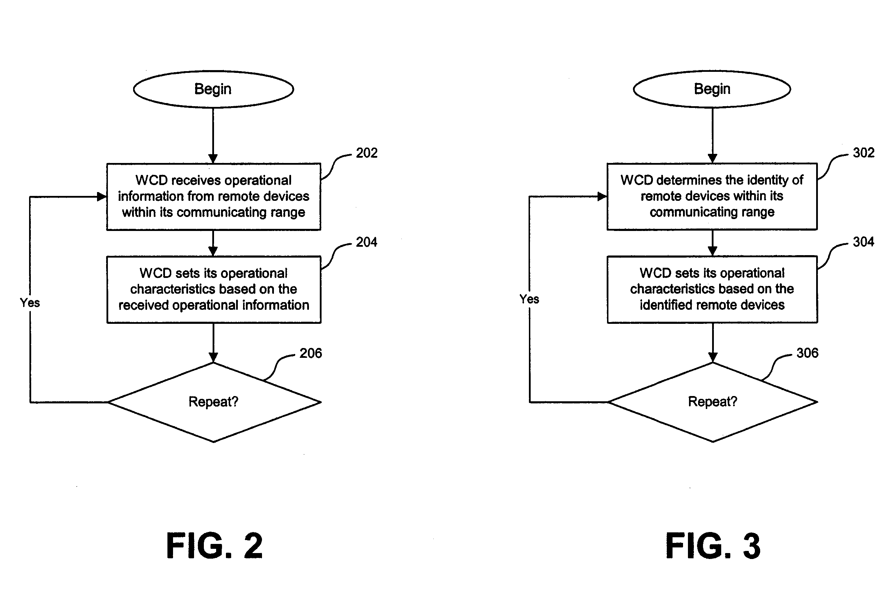

FIGs. 2 and 3 are flowcharts of processes according to embodiments of the present invention. For convenience, these processes are described with reference to the environment of FIGs. 1A and 1B. However, these processes may also be employed in othe r environments.

In the process of FIG. 2, WCD 102 infers its current context from operational information transmitted by remote devices. This process begins with a step 202, in which WCD 102 receives operational information from remote devices within its communications range. With reference to the scenarios of FIGs. 1A and 1B, these devices may include remote devices 104a-d at time T_{A}. However, at time T _{B}, these devices may include remote devices 104e -g and access point 106.

In a step 204, WCD 102 sets i ts operational characteristics based on the received operational information. As indicated by a step 206, steps 202 and 204 may be repeated. The repetition of these steps may be based on a schedule (e.g., predetermined time intervals), and/or events, such as the occurrence of new remote device encounters.

In the process of FIG. 3, WCD 102 infers its current context from the identities of remote devices. This process begins with a step 302, in which WCD 102 determines the identity of remote devices within its communications range. Next, in a step 304, WCD 102 sets its operational characteristics based on the remote devices identified in step 302. A step 306 indicates that steps 302 and 304 may be repeated. As in the process of FIG. 2, this repetition may be based, for example, on predetermined time intervals and/or events.

### II. Exemplary WCD

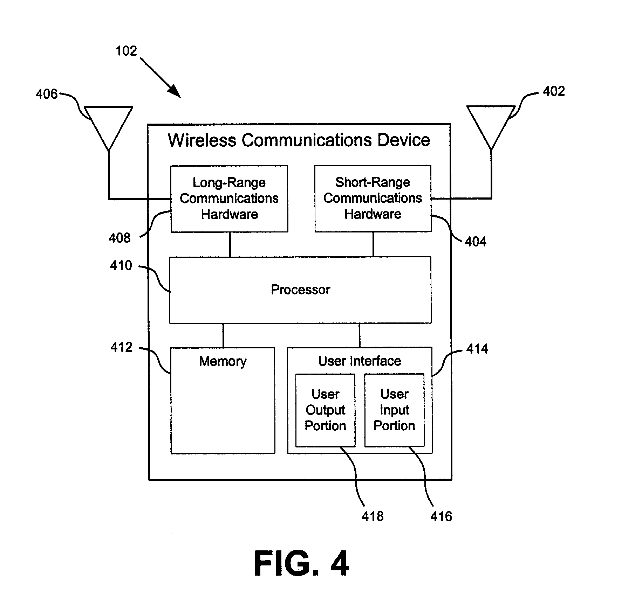

FIG. 4 is a block diagram showing an exemplary implementation of WCD 102 according to one embodiment of the present invention. This diagram shows that WCD 102 includes several components. For instance, WCD 102 includes a short -range communications hardware portion 404 that is coupled to an antenna 402. Short -range communications hardware portion 404 includes electronics, such as a transceiver, which allow WCD 102 (in c onjunction with antenna 402) to engage in bi -directional short-range RF communications with network entities, such as remote devices 104 and access point 106.

The WCD 102 implementation of FIG. 4 may also include a long -range communications hardware portio n 408 that is coupled to an antenna 406. Long -range communications hardware portion 408 includes electronics, such as a transceiver, which allow WCD 102 (in conjunction with antenna 406) to engage in bi -directional long-range RF communications. Such comm unications may include wireless telephony and data transfer with communications resources, such as cellular base stations and satellites.

As shown in FIG. 4, a processor 410 is coupled to communications hardware portions 404 and 408. Processor 410 control s operation of WCD 102. Processor 410 may be implemented with one or more microprocessors that are each capable of executing software instructions stored in a memory 412.

A user interface 414 is coupled to processor 410. User interface 414 facilitates the exchange of information with a user. FIG. 4 shows that user interface 414 includes a user input portion 416 and a user output portion 418. User input portion 416 may include one or more devices that allow a user to input information. Examples of such devices include keypads, touch screens, and microphones. User output portion 418 allows a user to receive information from WCD 102. Thus, user output portion 418 may include various devices, such as a display, and one or more audio speakers. Exemplary d isplays include liquid crystal displays (LCDs), and video displays.

Memory 412 includes random access memory (RAM), read only memory (ROM), and/or flash memory, and stores information in the form of data (e.g., in databases) and software components (also referred to herein as modules). These software components include instructions that can be executed by processor 410. Various types of software components may be stored in memory 412. For instance, memory 412 may store software components that control the operations of communications hardware portions 404 and 408, and software components that control the exchange of information through user interface 414. In addition, memory 412 may store software components that are associated with user applications.

These user applications allow WCD 102 to engage in communications sessions involving services, such as ad hoc networking, telephony, and the retrieval of content from remote servers. Furthermore, these user applications allow users of WCD 102 to store, mana ge, and retrieve information such as phonebook entries, calendar applications, and histories of remote device encounters.

User applications that allow WCD 102 to receive content from remote servers operate according to protocols, such as the Wireless Appli cation Protocol (WAP). When engaging in WAP communications with a remote server, WCD 102 functions as a WAP client. To provide this functionality, memory 412 includes WAP client software, such as WAP Client Version 4.0, which is a commercially available software product provided by Nokia Corporation of Finland. WAP Client Version 4.0 contains components, such as a Wireless Markup Language (WML) Browser, a WMLScript engine, a Push Subsystem, and a Wireless Protocol Stack.

Application software components stored in memory 412 of WCD 102 interact with the WAP client software to provide a variety of communications services. Examples of such communications services include the reception of Internet -based content, such as headline news, exchange rates, sports results, stock quotes, weather forecasts, multilingual phrase dictionaries, personal online calendars, and online travel and banking services.

WAP-enabled WCD 102 may access small files called decks which each include smaller pages called cards. Cards are small enough to fit into a small display area that is referred to herein as a microbrowser. The small size of the microbrowser and the small file sizes are suitable for accommodating low memory devices and low -bandwidth communications constraints imposed by wireless links.

Cards are written in the Wireless Markup Language (WML), which is specifically devised for small screens and one -hand navigation without a keyboard. WML is scaleable so that it is compatible with a wide range of displays that covers two -line text displays, as well as large LCD screens found on devices, such as smart phones, PDAs, and personal communicators. WML cards may include programs written in WMLScript, which is similar to JavaScript. However, through the elimination of several un necessary functions found in these other scripting languages, WMLScript places minimal demands on memory 412 and processor 410.

The illustrated elements of WCD 102 may be coupled according to various techniques. One such technique involves coupling commun ications hardware portions 404 and 408, processor 410, memory 412, and user interface 414 through one or more bus interfaces. In addition, each of these components is coupled to a power source, such as a removable and/or rechargeable battery pack (not sho wn).

### III. WCD Software Architecture

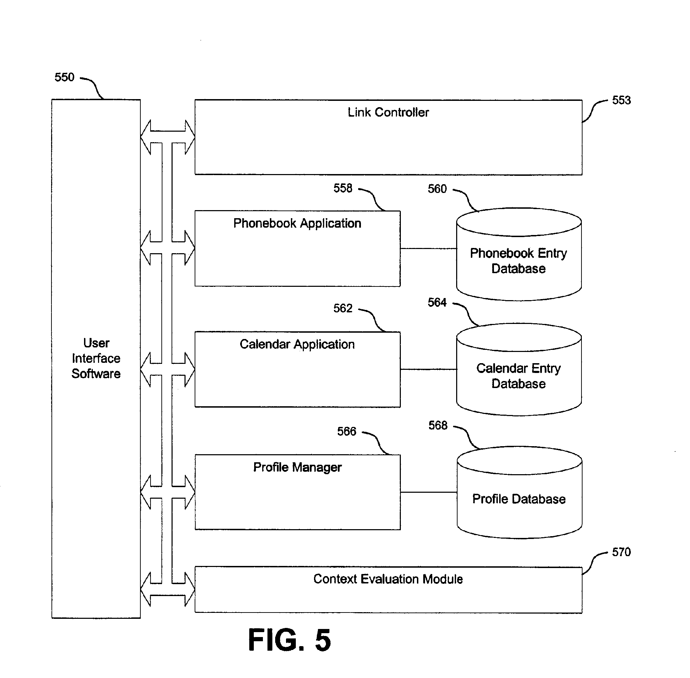

FIG. 5 is a block diagram showing a software architecture of databases and software components that may employed in WCD 102 according to one embodiment of the present invention. When employing the WCD 102 implementation of FIG. 4, these databases and software components may be stored in memory 412. This architecture provides WCD 102 with the capability to determine its current context.

The architecture of FIG. 5 includes various software components (also referred to herein as modules). As shown in FIG. 5, these modules include user interface software 550, a link controller 553, a phonebook application 558, a calendar application 562, a profile manager 566, and a context evaluation module 570. This architecture also includ es various databases, such as a phonebook entry database 560, a calendar entry database 564, and a profile database 568.

User interface software 550 allows a user to interact with various software applications and/or modules to operate WCD 102 according to the techniques of the present invention. In particular, user interface software 550 provides interfaces to modules 553, 558, 562, 566, and 570. These interfaces provide for the exchange of information, such as user - initiated commands, and information to be outputted by user interface 414. User interface software 550 also includes components, such as device drivers, that control the operation of user interface 414 components, such as displays, speakers, microphones, keypads, and/or touch screen displays.

Link controller 553 handles link level control and functionality for communications with remote devices. For example, in Bluetooth implementations, link controller 553 handles link operations, such as device discovery and paging. In handling these operations, link controller 553 interacts with hardware portions of WCD 102, such as short -range communications hardware portion 404 in the WCD 102 implementation of FIG. 4.

Phonebook application module 558 is coupled to phonebook entry database 560. Together, phonebook application module 558 and phonebook entry database 560 provide a user with the ability to store and retrieve contact information regarding people and devices.

Calendar application module 562 is coupled to calendar entry database 564. Calendar application 562 and calendar entry database 564 operate together so that a user may store and retrieve calendar items, such as scheduled appointments, as well as significant dates and times.

A profile is a set of parameters that defines various device aspe cts, such as the way a device acts. Profile manager 566 handles the entry, editing, selection, and activation of profiles. As shown in FIG. 5, profile manager 566 is coupled to profile database 568. Profile database 568 stores one or more profiles that may be processed by profile manager 566.

Context evaluation module 570 identifies the current context of WCD 102. To do this, context module may interact with other modules within the software architecture of FIG. 5. For instance, in making context deter minations based on identity of remote devices within communications range of WCD 102, context evaluation module 570 receives identifiers of such remote devices from link controller 553. In the Bluetooth implementations, these identifiers may be Bluetooth device addresses (BD_ADDRs). Link controller 553 may receive these identifiers through a Bluetooth device discovery process.

Once these identifiers are received, context evaluation module 570 may retrieve phonebook entry information corresponding to these remote device identifiers from phonebook application 558. Based on this phone book entry information, context evaluation module 570 may determine or infer the current context of WCD 102.

As a further example of making context determinations, context eval uation module 570, may receive (through link controller 553) operational information from remote devices within communications range of WCD 102. This operational information may include a context code that represents a context category (e.g., business, pe rsonal, silent, non-silent, etc.). Alternatively, this operational information may include the profiles of the remote devices. Based on this information, context evaluation module 570 makes a context determination. When context codes are received, this determination may involve identifying the predominant or most common context code. When profiles are received, this determination may involve identifying the predominant or most common occurrences of certain profile attributes.

Once context evaluation module 570 makes a context determination, this context information may be used by one or more applications. For instance, profile manager 566 may select and activate a profile based on this determination.

As described above, the architecture of FIG. 5 may be implemented using software running (that is, executing) in an environment similar to that described above with respect to FIG. 4. This software (also referred to herein as a computer program product) is stored in memory 412 and executed by processor 410. When executing, the software enables WCD 102 to perform the features of the present invention, as described herein.

However, the present invention may be implemented as control logic in software, firmware, hardware or any combination thereof. For exampl e, in embodiments, the invention is implemented primarily in firmware and/or hardware using, for example, hardware components such as application specific integrated circuits (ASICs). Implementation of a hardware state machine to perform the functions des cribed herein will be apparent to persons skilled in the relevant art(s).

### IV. Example Phonebook Entry Database

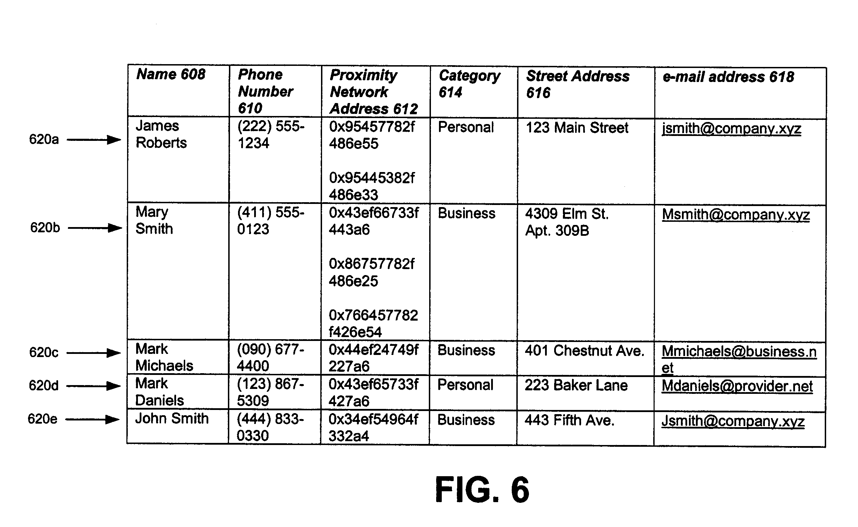

FIG. 6 is a diagram of an exemplary phonebook entry database 560 according to one embodiment of the present invention. This diagram illustrates the contents of phonebook entry database 560 in a tabular format. Phonebook entry database 560 includes several entries (also referred to herein as records) 620a -e. Each of these records contains information corresponding to another person or device. This person or device is referred to herein as a contact.

Each record 620 includes multiple fields. In particular, FIG. 6 shows that each record 620 includes a name field 608, a phone number field 610, a proximity network address field 612, a category field 614, a street address field 616, and an e-mail address field 618.

Name field 608 provides a name (such as a person's name) for the corresponding contact. Phone number field 610 provides a number by which WCD 102 may reach the corresponding contact through a telephonic connection. Such a connection may be established, for example, via a wireless cellular telephone network.

Proximity network address field 612 provides a short -range network address, such as a Bluetooth device address (BD_ADDR) for the correspo nding contact's device. As shown in FIG. 6, field 612 may include multiple short -range addresses for a single contact. For example, field 612 of record 620a includes two short -range addresses, and field 612 of record 620b includes three short-range addresses.

Each category field 614 includes an entry that provides a social context for the corresponding contact. Examples of such entries include "personal" and "business". Street address field 616 provides an address, such as a residence or place of busine ss, associated with the contact. Field 618 provides an address for sending e -mails to the corresponding contact.

The database of FIG. 6 is shown for purposes of illustration, and not limitation. Phonebook entry database 560 may have other arrangements. For example, database 560 may include other fields to represent additional or alternative information.

### V. Example Profile Database

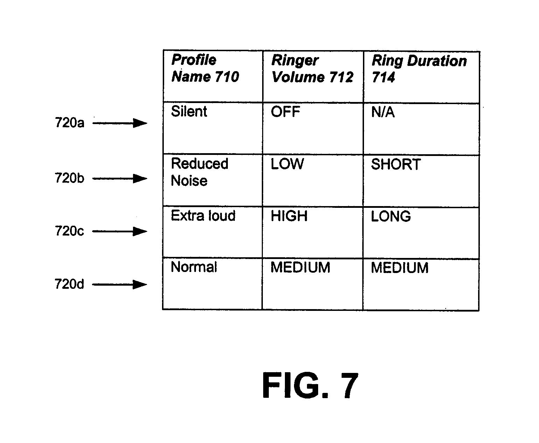

FIG. 7 is a diagram of an exemplary profile database 568 according to one embodiment of the present invention. This database i ncludes a plurality of records 720, each corresponding to a particular profile. Each of records 720 includes a profile name field 710, which assigns a name to the corresponding profile, a ringer volume field 712, and a ring duration field 714. Ringer volu me field 712 indicates how loud WCD 102 rings during events, such as an incoming call. Ring duration field 714 indicates how long WCD 102 will ring during such events.

When a particular profile is activated, the corresponding fields determine the behavior of WCD 102. For instance, if the reduced noise profile (corresponding to record 720b) is activated, WCD 102 will make short rings at a low volume when incoming calls occur.

The database of FIG. 7 is shown for purposes of illustration, and not in limitati on. Profile database 568 may have other arrangements. For example, profile database 568 may include other fields to represent additional or alternative information. Such fields may govern ring styles, display settings, security features, and/or other as pects of WCD 102 operation.

### VI. Operation

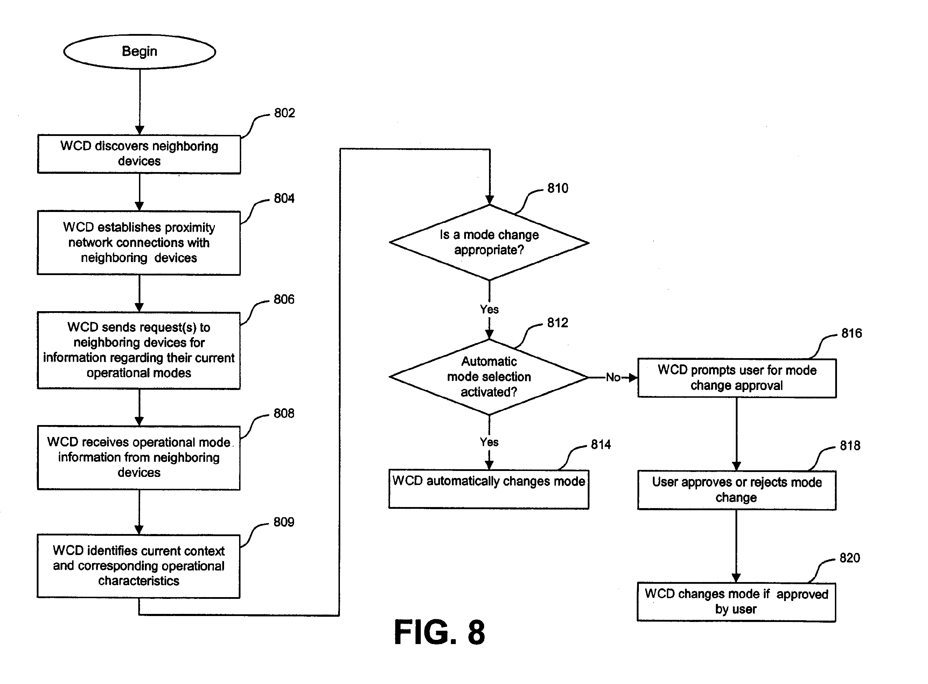

FIG. 8 is a flowchart of an operational sequence according to one embodiment of the present invention in which the operational mode of a wireless device is updated based on information received from remote communicati ons devices. For convenience, this sequence is described with reference to WCD 102.

The process of FIG. 8 begins with a step 802. In this step, WCD 102 discovers one or more remote devices that are within its communications range. These remote devices a re also referred to herein as neighboring devices.

In Bluetooth implementations, step 802 includes a device discovery process. During this process, WCD 102 operates in an inquiry state, while the remote device operates in an inquiry scan state. When operating in the inquiry state, WCD 102 transmits an inquiry packet, and each remote device listens for inquiry packets.

When a remote device receives the inquiry packet from WCD 102, it transmits one or more frequency hop synchronization (FHS) packets, which are received by WCD 102. The FHS packet(s) allow WCD 102 to become synchronized with the hop sequence of the remote device. In addition, the FHS packet(s) enable WCD 102 to derive information necessary to make a Bluetooth connection with the remote devic e. This information includes the native clock of the remote device (CLKN), the remote device's Bluetooth address (BD_ADDR), and error correction coding information.

At this point, WCD 102 has received identifiers (e.g., BD_ADDRs) of one or more remote devices. Accordingly, WCD 102 becomes aware of device(s) within its communications range.

In a step 804, WCD 102 establishes short -range proximity network connections with the one or more devices discovered in step 802. In Bluetooth implementations, step 80 4 includes a paging process. During the paging process, WCD 102 invites each discovered remote device to join an ad hoc network. Upon successful completion for each remote device, the paging process results in an unsecured connection being established be tween WCD 102 and the invited remote device. This process involves the exchange of various information between WCD 102 (which is in a paging state) and the remote device (which is in a page scan state).

At this point, a link is formed between WCD 102 and the remote device and both devices enter into a connection state. In the connection state, WCD 102 operates as a master device and the remote device operates as a slave device. Thus, the remote device employs the timing and frequency hopping sequence of WCD 102. At this point, an optional master/slave switch may be performed, in which WCD 102 becomes a slave device and the remote device becomes the master device.

In a step 806, WCD 102 requests operational mode information from the remote devices. This step may include sending a distinct request to each of the remote devices. Alternatively, this step may include broadcasting a single request to all of the remote devices.

Next, in a step 808, WCD 102 receives one or more responses from the remote devices. These responses include operational mode information. This operational mode information may include a context code that represents a context category (e.g., business, personal, silent, non-silent, etc.). Alternatively, this operational information may include the activated profiles (or particular profile portions) of the remote devices.

In step 808, the received responses may also be in the form of supplemental responses from remote devices that previously responded. These supplemental responses infor m WCD 102 when a remote device changes its operating characteristics.

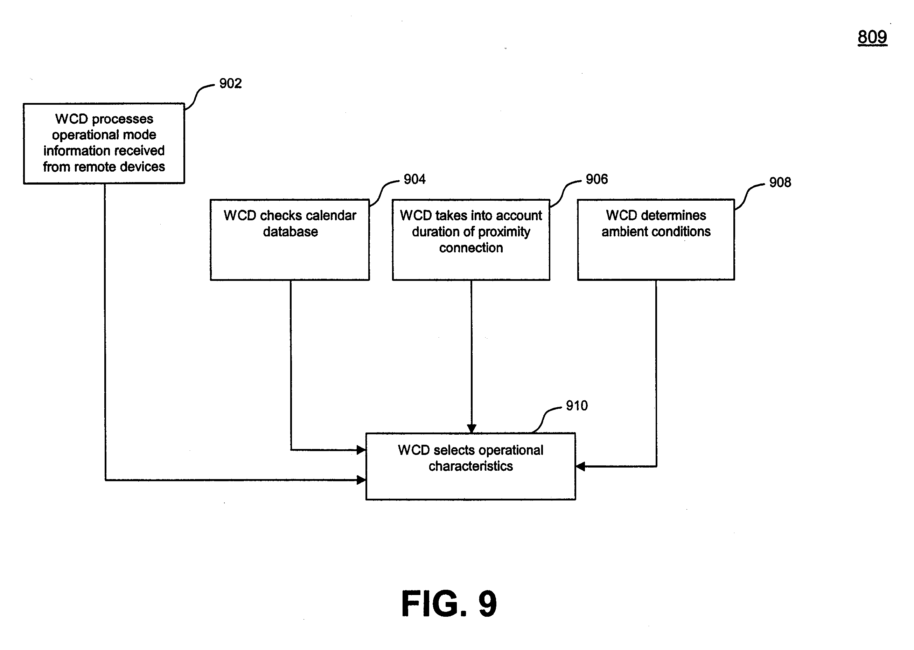

A step 809 follows step 808. In this step, WCD 102 identifies its current context and operational characteristics corresponding to this context. This identification is based on the response(s) received in step 808. In embodiments, this may be based on additional information. Step 809 may comprise WCD 102 selecting a particular profile for activation. A performance of step 809 is described in greater detail below with reference to FIG. 9.

A step 810 follows step 809. In this step, WCD 102 determines (based on step 809) whether an operational mode change is appropriate. If so, then a step 812 is performed. In step 812, WCD 102 determines whether an automatic mode selection feature is activated. If so, then operation proceeds to a step 814, where WCD 102 automatically changes its operational mode. With reference to the architecture of FIG. 5, steps 809, 810, and 812 may be performed by context evaluation module 570. Step 814 may be performed by context evaluation module 570 in conjunction with profile manager 566.

If the automatic mode selection feature is not activated, then operation proceeds from step 812 to a step 816. In this step, WCD 102 prompts its user to approve a mode cha nge. With reference to the architecture of FIG. 5, this step may be performed by user interface software 550 in conjunction with context evaluation module 570.

In a step 818, the user either approves or rejects this mode change. If the user approves the change, then WCD 102 changes the mode in a step 820. Accordingly, step 820 may comprise activating a profile selected in step 810 based on the context identified in that step.

FIG. 9 is a flowchart showing a performance of step 809 in greater detail according to one embodiment of the present invention. As shown in FIG. 9, this performance includes a step 902 and optional steps 904 -908. These steps may be performed in any combination. In step 902, WCD 102 processes the operational mode information receiv ed from the remote device(s) in step 808. This step comprises identifying the predominant (e.g., most common) operational characteristic(s) received. In embodiments, these operational characteristics may be derived from fields in received profiles that indicate operational parameters.

One or more of optional steps 904 -908 may be performed according to, for example, user-inputted preferences. In these steps, WCD 102 may alter the predominant characteristics determined in step 902. For instance, in step 9 04, WCD 102 checks its calendar database to determine whether there is a meeting that is scheduled within a predetermined period of the current time. If so, WCD 102 determines whether the meeting suggests a context that would conflict with the predominant operational characteristics identified in step 902.

For instance, in step 902, WCD 102 may have identified a loud ring as a predominant operational characteristic. However, if in step 904, WCD 102 identifies whether there is a currently a meeting with a contact database entry marked "business", then WCD 102 may alter this predominant operational characteristic into a softer ring.

In step 906, WCD 102 takes into account the duration that the identified remote devices have been in communicating range. For example, if an identified remote device has been in communicating range for less than a predetermined amount of time, then WCD 102 may identify this device as a transient device, and discount its contribution to the predominant operational characteristic.

In step 908, WCD 102 takes into account ambient conditions, such as background acoustic noise. If such conditions contradict the predominant operational characteristic, then WCD 102 may alter this predominant operational characteristic. For example, if i n step 902, WCD 102 may identify a quiet ring as a predominant operational characteristic, but recognize (e.g., through a microphone on user interface 414) a high level of background noise. When such a condition occurs, WCD 102 may alter this predominant operational characteristic into a louder ring.

As shown in FIG. 9, a step 910 follows steps 902 -908. In step 910, WCD 102 identifies the current context by selecting its own operational characteristics based on the predominant operational characteristics identified in steps 902 and 904 -908. These operational characteristics may be in the form of a profile stored, for example, in profile database 568. Alternatively, these operational characteristics may be in the form of a new profile created by WCD 102 based on the predominant operational characteristics.

When the selected operational characteristics are in the form of a stored profile, step 910 comprises searching profile database for the record having fields that most closely match the predominant operational characteristics.

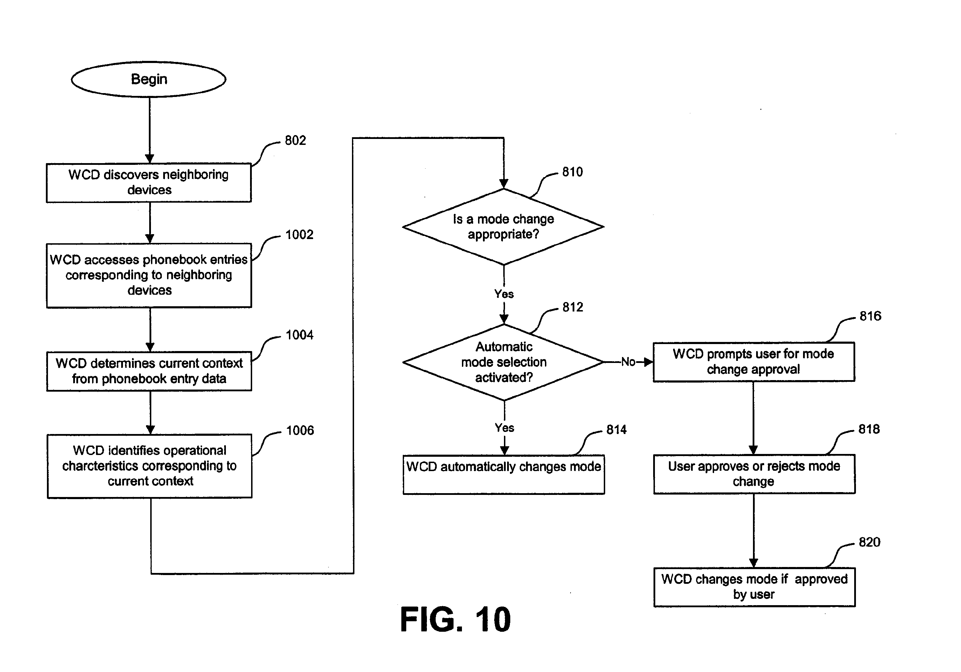

FIG. 10 is a flowchart of an operational sequence according to one embodiment of the present invention in which the operational mode of a wireless device is updated based on the identities of remote communications devices. For conv enience, this sequence is described with reference to WCD 102.

FIG. 10 is similar to FIG. 8. However, in FIG. 10, steps 804, 806, 808, and 809 have been replaced with steps 1002, 1004, and 1006. In step 1002, WCD 102 identifies phonebook entries corresponding to devices discovered in step 802. With reference to the phonebook entry database of FIG. 6, this step may comprise searching phonebook entry database 560 for short-range device identifiers (e.g., BD_ADDRs) received in step 802.

In step 1004, WCD 10 2 determines its current context from the phonebook entries identified in step 1002. This step may comprise checking one or more fields for each entry and determining the predominant (e.g., most common) values of these fields. For example, with reference to the phonebook entry database of FIG. 6, step 1004 may comprise determining the predominant value of category field 614. Such a determination may identify the current context as either "personal" or "business."

Once the current context is identified, a step 1006 is performed. In this step, WCD 102 selects one or more operational characteristics that correspond to the current context. These operational characteristics may be in the form of a profile. In embodiments, the selection of operational characteristics in step 1006 may be based on additional information.

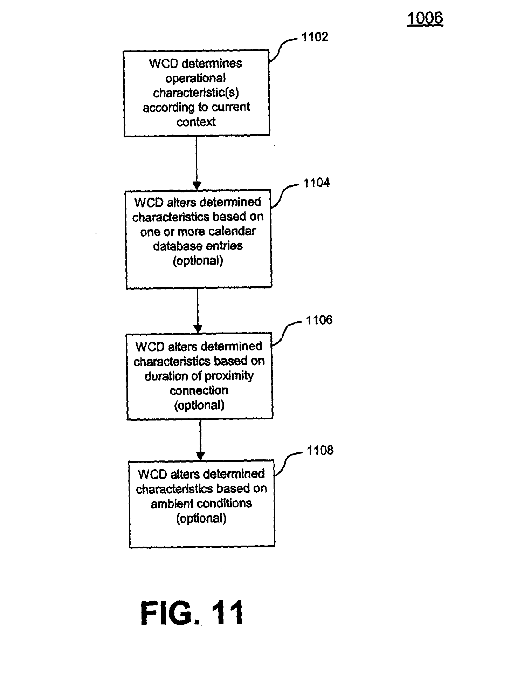

FIG. 11 is a flowchart of showing a performance of step 1006 according to one embodiment of the present invention. This performance includes a step 1102 and optional steps 1104-1108. These steps may be performed in any combination. In step 1102, WCD 102 determines one or more operational characteristics corresponding to the current context determined in step 1004. Accordingly, this step may comprise WCD 102 accessing a lookup table containing entries that are indexed according to various contexts (e.g., "social", "personal", or "business"). For each context, the lookup table provides operational characteristics, such as a stored profile.

One or more of optional steps 1104-1108 may be performed according to, for example, user-inputted preferences. In these steps, WCD 102 may alter the operational characteristics determined in step 1102. For instance, in step 1104, WCD 102 checks its calendar database to determine whether there is a meeting t hat is scheduled within a predetermined period of the current time. If so, WCD 102 determines whether the meeting suggests a context that would conflict with the operational characteristics identified in step 1102.

For instance, in step 1102, WCD 102 may have identified a loud ring as a operational characteristic. However, if in step 1104, WCD 102 identifies whether there is a currently a meeting with a contact database entry marked "business", then WCD 102 may alter this operational characteristic into a softer ring.

In step 1106, WCD 102 takes into account the duration that the identified remote devices have been in communicating range. For example, if an identified remote device has been in communicating range for less than a predetermined amount of ti me, then WCD 102 may identify this device as a transient device, and discount its contribution to the current context and the operational characteristic determined in step 1102.

In step 1108, WCD 102 takes into account ambient conditions, such as background acoustic noise. If such conditions contradict the operational characteristic, then WCD 102 may alter this operational characteristic. For example, in step 1102, WCD 102 determines a quiet ring as an operational characteristic. However, in step 1108, W CD 102 may recognize (e.g., through a microphone on user interface 414) a high level of background noise. When such a condition occurs, WCD 102 may alter this operational characteristic into a louder ring.

### VII. Further Operational Characteristics

As described above, the present invention provides techniques for a device to infer its current context from devices within its communications range. Based on this, the device may set its operational characteristics, as described above with reference to steps 204 and 304, as well as with reference to the exemplary operational sequences of FIGs. 8-11. As indicated above, examples of operational characteristics include ring volume and ring duration. However, further ring-related characteristics may also be set, such a s an active ring tone selected from a set of available ring tones.

Moreover, further operational characteristics may be set based on the inferred context. For instance, an application of the device may be started (i.e., "launched") or stopped (i.e., "terminated"). Also, the operation of a currently executing application may be affected in other ways. For example, an application may be brought to either the foreground or the background of a graphical user interface (GUI). Further, an event notification m ay be sent to a running application. Such an event notification may provide a context indication and may affect operation of the existing application based on the device's context, for example, in the manner described above.

In addition, processes, such as a download from one or more of the nearby devices may be initiated based on the inferred context. Also, the device's user interface characteristics (i.e., its "skin") may be changed based on the inferred context. This may involve, for example, changing a background picture of the idle screen.

Power management configuration may be changed for the device based on its inferred context. This may be performed to achieve, for example, greater battery efficiency. As an example, the device may set its power c onsumption characteristics. This may include, for example, turn on or off its transmitter(s) (e.g., cellular, Bluetooth, RFID, WLAN or UWB transmitters) based on the inferred context. With reference to the implementation of FIG. 4, these transmitters may be included in communications hardware portions 404 and 408.

The inferred context may be stored in the device's memory (e.g., memory 412). Also, the identities (e.g., addresses) of the nearby devices, may be automatically stored, for example, in phoneboo k entry database 560, as a group associated with the current context.

Operational characteristics such as these may be implemented through various techniques. For example, an operating system level script may be used set any combination of one or more operational characteristics. Accordingly, processor 410, in general, may set operational characteristics. One or more modules of FIG.5, such as user interface software 550, profile manager 566, and/or context evaluation module 570 may initiate this.

### VIII. Communicating External Conditions

As described above, a device may receive external conditions from remote devices. Examples of this are described above with reference to step 202 of FIG. 2 and step 808 of FIG. 8. Such external conditions may describe various operational characteristics or conditions of remote devices.

Accordingly, remote devices may communicate such external conditions by sending a message including the "whole package", which conveys a set of its current operational characteristics. Alternatively, remote devices may communicate external conditions by sending a message that merely includes, for example, one or more identifiers. In embodiments of the present invention, each of these identifiers points out a specific detail (e.g., a specific ope rational characteristic) of the remote device's current operational characteristics, and a "value" or indication of the current setting of the specific operational characteristic. Examples of such specific remote device details include a ring setting, a security setting, a location, and a temperature. Thus, in embodiments of the present invention, a device may receive only a portion of the remote device's complete operational characteristics.

In embodiments of the present invention, the external condition may be described and communicated in a message using a key -value pair. According to this approach, the keys are pre-defined entities that are known to both the transmitter and the receiver. A key indicates a specific operational characteristic of a devic e (e.g., location, temperature, ring setting, etc.). The value that corresponds to the key is an instance of a particular variable. More particularly, the value indicates a specific setting of the characteristic indicated by the corresponding key. This value may be a tuple of n values, or just a single value.

For example, an external device may transmit (e.g., broadcast) its location using a 3-tuple "location = (latitude, longitude, height)". In this case, location is the key, while latitude, longitude, and height are corresponding values. An example using only a single value is "temperature = 25". In this example, temperature is the key and 25 is the corresponding value. The interpretation of the value depends on the type of the key, and is defined a ccording to an external standard (i.e., known to multiple devices).

### IX. Mapping Between External Conditions and Operational Characteristics

The techniques described herein involve the mapping of various external conditions to one or more operational character istics. For instance, in step 204 of FIG. 2, a device sets its operational characteristics based on operational information received from other devices. Also, in the flowchart of FIG. 8, a device sets its operational characteristic(s) based on operational information received from other devices. Various mechanisms may be used to provide this mapping. For instance, lists may be used that provide correspondences between external conditions and operational characteristics.

Accordingly, in embodiments of th e present invention, a device may store a pre - defined list within its memory. For example, the WCD 102 implementation of FIG. 4 may store such a list within memory 412. However, in further embodiments, such a list may be defined and stored in the device's memory through user interaction with a device's graphical user interface (GUI). With reference to the implementation of FIG. 4, a GUI may be provided through user interface 414 operating in conjunction with user interface software 550. Also, such lists may be defined through other applications, such as a scripting language program.

Moreover, such lists may be transferred to a device, for example, through a wireless link. Once received, these lists may be stored in the device's memory (e.g., memory 412). Such over-the-air transferred lists may be received from remote devices that also provide external conditions. For instance, with reference to the operational scenarios of FIGs. 1A and 1B, WCD 102 may receive such lists from one or more of remote devic es 104 and access point 106. Alternatively, such lists may be transferred from other nearby devices in a peer -to-peer fashion.

### X. Conclusion

While various embodiments of the present invention have been described above, it should be understood that they have been presented by way of example only, and not limitation. For instance, the present invention is not limited to Bluetooth. For instance, the present invention may be employed with other technologies, such as radio frequency identification (RFID), ultra wideband (UWB) and wireless local area network (e.g., IEEE 802.14).

In addition, while techniques have been described for changing a device's operational characteristics based on a current context determination, various types of applications running on a wireless device may also utilize such context determinations.
Accordingly, it will be apparent to persons skilled in the relevant art that various changes in form and detail can be made therein without departing from the spirit and scope of the invention. Thus, the breadth and scope of the present invention should not be limited by any of the above - described exemplary embodiments, but should be defined only in accordance with the following claims and their equivalents.

## Claims

1. A method of controlling ope rational characteristics in a short -range wireless communications device (WCD), the method comprising:
(a) receiving operational information across a short -range wireless network, the operational information corresponding to one or more remote devices wit hin a short-range communications range of the WCD;
(b) setting at least one operational characteristic of the WCD based on the received operational information.

2. The method of claim 1, wherein step (a) comprises:
identifying the one or more remote dev ices; and
transmitting at least one request for the operational information across the short -range wireless network.

3. The method of claim 1 or 2, wherein step (b) comprises:
identifying a predominant operational characteristic from the received operat ional information; and
setting the operational characteristic of the WCD based on the predominant operational characteristic.

4. The method of claim 3, wherein step (b) further comprises adjusting the predominant operational characteristic based on a con text indicator included in a scheduled appointment stored by the WCD.

5. The method of claim 3, wherein step (b) further comprises adjusting the predominant operational characteristic based on the duration that each of the one or more remote devices has been within communications range of the WCD.

6. The method of claim 3, wherein step (b) further comprises adjusting the predominant operational characteristic based on an ambient condition of the WCD.

7. The method of claim 6, wherein the ambient conditio n is background acoustic noise.

8. The method of any preceding claim, wherein step (b) comprises setting a ring volume or activating a profile stored by the WCD or starting an application or bringing an application to the foreground of a graphical user in terface or initiating a download from the one or more remote devices or setting an active ring tone of the WCD or setting power consumption characteristics of the WCD.

9. The method of any preceding claim including:
(c) identifying one or more remote dev ices within short-range communications range of the WCD; and
(d) setting at least one operational characteristic of the WCD based on the one or more identified remote devices.

10. The method of claim 9, wherein step (c) comprises performing a Bluetooth i nquiry process.

11. The method of claim 9, wherein step (c) comprises receiving one or more addresses corresponding to the one or more remote devices.

12. The method of claim 11, wherein the one or more addresses are Bluethooth device addresses (BD_ADDRs).

13. The method of claim 9, wherein step (c) comprises:
identifying one or more phonebook entries corresponding to the one or more remote devices;
determining a current context of the WCD based on the one or more phonebook entries;
selecting the operational characteristic of the WCD, wherein the operational characteristic of the WCD corresponds to the current context of the WCD.

14. The method of claim 9, wherein step (d) comprises setting the operational characteristic of the WCD based on the one or more identified remote devices and a context associated with a scheduled appointment stored in the WCD.

15. The method of claim 9, wherein step (d) comprises setting the operational characteristic of the WCD based on the one or more identified remote dev ices and on the duration that each of one or more remote devices has been within communications range of the WCD.

16. The method of claim 9, wherein step (d) comprises setting the operational characteristic of the WCD based on the one or more identified r emote devices and an ambient condition of the WCD.

17. The method of claim 9, wherein the ambient condition is background acoustic noise.

18. The method of claim 9, wherein step (d) comprises setting a ring volume, or setting a ring duration or activatin g a profile stored by the WCD, or starting an application, or stopping an application, or bringing an application to the foreground of a graphical user interface, or bringing an application to the background of a graphical user interface, or initiating a d ownload from the one or more remote devices, or setting an active ring tone of the WCD, or setting power consumption characteristics of the WCD, or setting user interface characteristics of the WCD.

19. A wireless communications device, comprising:
a short-range wireless communications portion for communicating across short -range wireless communications networks;
a memory; and
a processor that executes instructions stored in the memory for:
receiving operational information across the short -range wireless network, the operational information corresponding to one or more remote devices within short -range communications range of the WCD;
setting at least one operational characteristic of the WCD based on the received operational information.

20. A wireless communications device, comprising:
a short-range wireless communications portion for communicating across short -range wireless communications networks;
a memory; and
a processor that executes instructions stored in the memory for:
identifying one or more remote devices within short -range communications range of the WCD; and
setting at least one operational characteristic of the WCD based on the one or more identified remote devices.

21. A system of controlling operational characteristics in a shor t-range wireless communications device (WCD), the system comprising:
means for receiving operational information across a short -range wireless network, the operational information corresponding to one or more remote devices within short -range communications range of the WCD;
means for setting at least one operational characteristic of the WCD based on the received operational information.

22. The system of claim 21, wherein said means for receiving operational information comprises:
means for identifying the one or more remote devices; and
means for transmitting at least one request for the operational information across the short-range wireless network.

23. The system of claim 21, wherein said identifying means comprises means for performing a Bluetooth inquiry process.

24. The system of claim 21, wherein said means for setting an operational characteristic comprises:
means for identifying a predominant operational characteristic from the received operational information; and
means for setting the ope rational characteristics of the WCD based on the predominant operational characteristic.

25. The system of claim 24, wherein said means for setting an operational characteristic further comprises means for adjusting the predominant operational characterist ic based on a context indicator included in a scheduled appointment stored by the WCD.

26. The system of claim 24, wherein said means for setting an operational characteristic further comprises means for adjusting the predominant operational characteristi c based on the duration that each of the one or more remote devices has been within communications range of the WCD.

27. The system of claim 24, wherein said means for setting an operational characteristic further comprises means for adjusting the predomi nant operational characteristic based on an ambient condition of the WCD.

28. The system of claim 27, wherein the ambient condition is background acoustic noise.

29. The system of claim 21, wherein said means for setting an operational characteristic comprises:
means for setting a ring volume, or
means for setting a ring duration, or
means for activating a profile stored by the WCD, or
means for starting an application, or
means for bringing an application to the foreground of a graphical user interface , or
means for bringing an application to the background of a graphical user interface, or
means for initiating a download from the one or more remote devices, or
means for setting an active ring tone of the WCD, or
means for setting power consumption char acteristics of the WCD or
means for setting user interface characteristics of the WCD.

30. The system of claim 21, wherein said means for receiving operational information comprises means for receiving only a portion of the complete operational characteri stics for each of the one or more remote devices.

31. The system of claim 21, wherein said means for receiving operational information comprises means for receiving from each of the one or more remote devices a message having a key and a value; wherein th e key is defined according to an external standard and indicates a specific operational characteristic for the remote device; and wherein the value indicates a setting of the specific operational characteristic.

32. The system of any one of claims 21 to 3 1 including :
means for identifying one or more remote devices within short -range communications range of the WCD; and
means for setting at least one operational characteristic of the WCD based on the one or more identified remote devices.

33. The system of claim 32, wherein said means for setting an operational characteristic of the WCD comprises:
means for identifying one or more phonebook entries corresponding to the one or more remote devices;
means for determining a current context of the WCD based on the one or more phonebook entries;
means for selecting the operational characteristic of the WCD, wherein the operational characteristic of the WCD corresponds to the current context of the WCD.

34. The system of claim 32, wherein said means for setti ng an operational characteristic of the WCD comprises means for setting the operational characteristic of the WCD based on the one or more identified remote devices and a context associated with a scheduled appointment stored in the WCD.

35. The system of claim 32, wherein said means for setting an operational characteristic of the WCD comprises means for setting the operational characteristic of the WCD based on the one or more identified remote devices and on the duration that each of one or more remote devices has been within communications range of the WCD.
